Europäisches Patentamt

European Patent Office

Office européen des brevets

(19)

(11) Veröffentlichungsnummer : **0 421 066 B1**

(12) **EUROPÄISCHE PATENTSCHRIFT**

(45) Veröffentlichungstag der Patentschrift :
**02.02.94 Patentblatt 94/05**

(51) Int. Cl.$^5$ : **G01K 13/00,** B60T 17/22,
F16D 66/00

(21) Anmeldenummer : **90113804.0**

(22) Anmeldetag : **19.07.90**

(54) **Verfahren und Anordnung zur überschlägigen Ermittlung der mittleren Temperatur eines Bauteils einer Bremseinrichtung.**

(30) Priorität : **13.09.89 DE 3930572**

(43) Veröffentlichungstag der Anmeldung :
**10.04.91 Patentblatt 91/15**

(45) Bekanntmachung des Hinweises auf die
Patenterteilung :
**02.02.94 Patentblatt 94/05**

(84) Benannte Vertragsstaaten :
**DE ES FR GB IT NL SE**

(56) Entgegenhaltungen :
**WO-A-84/00406
DE-A- 3 502 052
US-A- 2 031 741
SOVIET INVENTIONS ILLUSTRATED, EL Sektion, Woche C 38, 29. Oktober 1980 DERWENT
PUBLICATIONS LTD., London, S 02**

(73) Patentinhaber : **WABCO
Vermögensverwaltungs-GmbH
Postfach, Am Lindener Hafen 21
D-30432 Hannover (DE)**

(72) Erfinder : **Feldmann, Joachim
Auf dem Papenberg 8
D-3057 Neustadt 2 (DE)**
Erfinder : **Schult, Manfred, Dr.
Carl-Zuckmayer-Strasse 4
D-3008 Garbsen 8 (DE)**
Erfinder : **Petersen, Erwin, Dr.
Fliederweg 22
D-3050 Wunstorf 1 (DE)**

(74) Vertreter : **Schrödter, Manfred, Dipl.-Ing.
WABCO Vermögensverwaltungs-GmbH
Postfach 91 12 80
D-30432 Hannover (DE)**

**Beschreibung**

Die Erfindung betrifft ein Verfahren zur überschlägigen Ermittlung der mittleren Temperatur eines Bauteils einer durch Bremsdruck betätigbaren Bremseinrichtung gemäß dem Oberbegriff des Patentanspruchs 1 und eine Anordnung zur Durchführung des Verfahrens.

Ein derartiges Verfahren ist aus der DE 35 02 052 A1, siehe dort insbesondere Seite 10 erster Absatz, bekannt. Dieses Verfahren sieht die Verwendung mehrerer auf dem Bauteil oder in dessen Nachbarschaft verteilter Temperatursensoren vor, deren Temperatursignale zu einem Signal gemittelt werden, welches die mittlere Temperatur des Bauteils abbildet.

Da ein Temperatursensor ein kostspieliges Bauelement ist, bedeutet der Einsatz mehrerer Temperatursensoren bei dem bekannten Verfahren einen erheblichen Aufwand.

Der Erfindung liegt deshalb die Aufgabe zugrunde, ein Verfahren der eingangs genannten Art zu vereinfachen.

Diese Aufgabe wird durch die im Patentanspruch 1 angegebene Erfindung gelöst. Vorteilhafte Weiterbildungen sowie Anordnungen zur Durchführung der Erfindung sind in den Unteransprüchen angegeben.

Die Erfindung läßt sich mit Bauelementen durchführen, die den in der Bremseinrichtung auftretenden Temperaturen nicht ausgesetzt sein müssen. Die Erfindung läßt sich daher mit besonders geringer Störanfälligkeit ausführen.

Die Erfindung bedarf besonders geringen speziellen Aufwands, wenn eines oder mehrere der zu ihrer Durchführung erforderlichen Bauelemente schon aus anderen Gründen vorhanden sind, wie z.B. ein Drucksensor bei einer bestimmten Art elektrischer Bremsdrucksteuerung und/oder ein als Verformungssensor einsetzbarer Drehwinkel (Hub-)sensor zur Überwachung der Verschleiß-Nachstelleinrichtung.

Ist das Bauteil, dessen mittlere Temperatur die Erfindung ermittelt, so ausgewählt, daß seine mittlere Temperatur den thermischen Belastungszustand der Bremseinrichtung wiederspiegelt, so kann die Erfindung mit einfachen Mitteln zu einem Verfahren zur Erkennung einer thermischen Überlastungsgefahr der Bremseinrichtung, wofür der Ausdruck "Fading-Erkennung" gebräuchlich ist, weitergebildet werden.

Weitere Vorteile der Erfindung werden in deren nunmehr folgender Erläuterung anhand eines Ausführungsbeispiels angegeben.

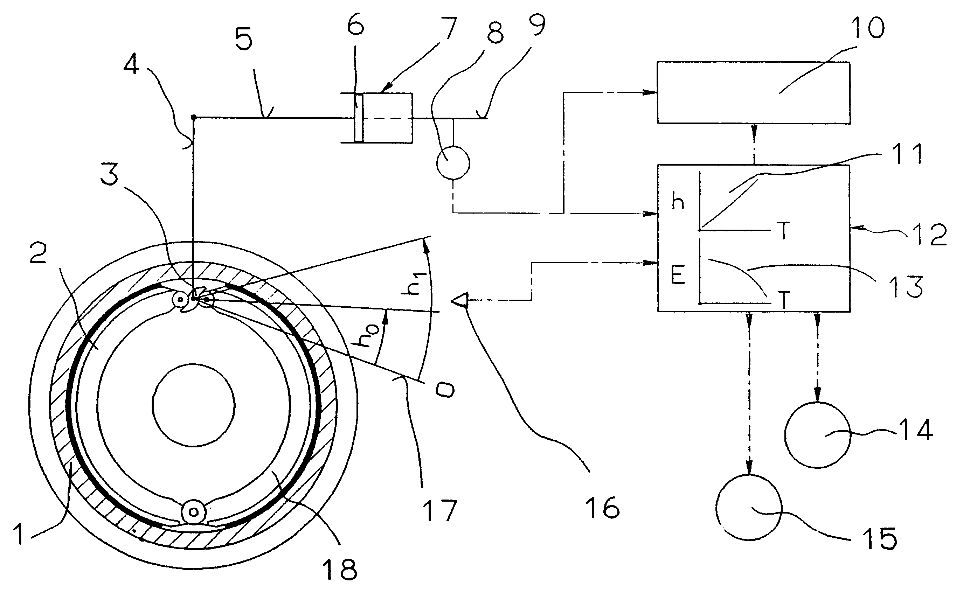

Mit strichpunktierten Linien als elektrischen Verbindungen zeigt die Figur schematisch eine Bremseinrichtung mit Anordnung zur Durchführung der Erfindung.

Die Bremseinrichtung besteht aus einer Trommelbremse mit einer Bremstrommel (1) und Bremsbacken (2, 18) sowie einer Betätigungseinrichtung.

Die Betätigungseinrichtung besteht aus einem Bremszylinder (7) mit einem Kolbenglied (6), welches als Kolben mit Ringdichtung(en) oder als Membrankolben ausgebildet sein kann, einem Bremsnocken (3) und einer das Kolbenglied (6) mit dem Bremsnocken (3) verbindenden Übertragungseinrichtung (4, 5), die eine in bekannter Weise aufgebaute und deshalb nicht näher dargestellte Verschleiß-Nachstelleinrichtung enthält.

Die Bremstrommel (1) sei dasjenige Bauteil der Bremseinrichtung, dessen mittlere Temperatur durch die weiter unten beschriebene Anordnung ermittelt werden soll.

Eine solche Bremseinrichtung ist bekannt. Es erscheint zweckmäßig, die im Rahmen der vorliegenden Erfindung neu aufgezeigten Aspekte ihres Betriebsverhaltens in die Rekapitulation bekannter Aspekte einzubetten.

Bei unbetätigter Bremseinrichtung, d.h. im druckfreien Zustand derselben, hängt der Bremstrommeldurchmesser von der Temperatur der Bremstrommel (1) und einer etwaigen von der Montage herrührenden mechanischen Grundbelastung ab. Bei einer gewählten Normaltemperatur wird der Bremstrommeldurchmesser als normal angenommen. Bei jeder anderen Temperatur ist der Bremstrommeldurchmesser demgegenüber verändert, d.h. die Bremstrommel (1) verformt. Die Temperatur der Bremstrommel hängt außer von der Umgebungstemperatur von der Aufheizung bei der oder den vorausgegangenen Bremsbetätigung(en) ab.

Wird die Bremseinrichtung durch Zufuhr eines Drucks zum Bremszylinder (7) über eine Druckleitung (9) betätigt, so wird die Bremstrommel (1) nach Überwindung eines Ansprechwiderstands durch die Anpreßkraft der Bremsbacken (2, 18) mechanisch belastet und entsprechend elastisch verformt. Gleichzeitig wird die Bremstrommel (1) durch die erbrachte Bremsarbeit aufgeheizt und dadurch zusätzlich thermisch verformt. Der Bremstrommeldurchmesser ändert (vergrößert) sich entsprechend.

Die Verformung der Bremstrommel (1) in Gestalt der Veränderung ihres Durchmessers hat eine Veränderung der Stellwege an der Bremsbetätigung beteiligter Bauteile der Betätigungseinrichtung zur Folge. Diese Stellwege können deshalb bei wirksamer Verschleiß-Nachstelleinrichtung als eine charakteristische Verformung des Bauteils Bremstrommel (1) abbildende Größen ausgewerter werden. Im folgenden wird als solche Größe der Drehwinkel des Bremsnockens (3) herangezogen.

Im unbetätigten Zustand der Bremseinrichtung befinden sich das Kolbenglied (6) und mit ihm die Übertragungseinrichtung (4, 5) sowie der Bremsnocken (3) und die Bremsbacken (2, 18) unter der Einwirkung von nicht dargestellten Rückstellmitteln in einer Rückzugstellung. Ein beliebiger Strahl (17) durch die Drehachse des Bremsnockens (3) lege den zugeordneten Drehwinkel Null (0) des Bremsnockens (3) fest. In diesem Zustand weisen die Bremsbacken (2, 18) gegenüber der Bremstrommel (1) ein Lüftspiel auf.

Da vorliegend die Verschleiß-Nachstelleinrichtung eine Vergrößerung des Lüftspiels infolge Bremsbelagverschleißes ausgleicht, hängt dieses außer von der Grundeinstellung - die in der Regel bei Normaltemperatur stattfindet - nur von der temperaturabhängigen Verformung der Bremstrommel (1) ab.

Bei Betätigung der Bremseinrichtung werden zunächst gegen den Ansprechwiderstand - dazu gehört u.a. die Kraft der Rückstellmittel - durch Drehung des Bremsnockens (3) um einen Anfangs-Drehwinkel ($h_0$) das Lüftspiel überwunden und dadurch die Bremsbacken (2, 18) gerade an die Bremstrommel (1) angelegt. Der Anfangs-Drehwinkel ($h_0$) bildet also das vorhandene Lüftspiel und damit die temperaturabhängige Anfangsverformung und damit wiederum die Anfangstemperatur ($T_0$) der Bremstrommel (1) ab. Der dem Anfangs-Drehwinkel ($h_0$) zugeordnete Druck ist der Ansprechdruck ($p_0$).

Bei dem anschließenden Anstieg des Drucks im Bremszylinder (7) auf den vom Fahrer als Bremsdruck gewollten Wert ($p_1$) erfährt die Bremstrommel (1) die bereits erwähnte gleichzeitige elastische und zusätzliche thermische Verformung mit entsprechender Veränderung ihres Durchmessers.

Wenn die Bremstrommel (1) eine Beharrungstemperatur erreicht hat bzw. zu einem willkürlich gewählten Zeitpunkt ($t_1$) nach Beginn der Bremsbetätigung hat diese Verformung der Bremstrommel (1) zu einer Vergrößerung des Drehwinkels des Bremsnockens (3) auf einen Drehwinkel ($h_1$) geführt. Die Differenz der Drehwinkel ($h_1$) - ($h_0$) bildet also die Verformung der Bremstrommel unter der Einwirkung des Bremsdrucks ($p_1$) ab. Die bei Beharrungstemperatur der Bremstrommel (1) bzw. im Zeitpunkt ($t_1$) vorhandene Verformung läßt sich demzufolge in der Form

$$h_1 = h_0 + h_{1el} + h_{1th} \quad (I)$$

mit

$h_{1el}$ als deren elastischem Anteil und

$h_{1th}$ als deren thermischem Anteil

ausdrücken.

Der elastische Anteil ($h_{1el}$) und der Bremsdruck ($p_1$) sind gemäß dem Hookeschen Gesetz voneinander abhängig. Auf die speziellen Verhältnisse der vorliegenden Bremseinrichtung zugeschnitten, läßt sich dieses in der Form

$$h_{1el} = \frac{1}{E_1} \cdot C \cdot (p_1 - p_0) \quad (II)$$

schreiben, worin

$E_1$ der Elastizitätsmodul des Werkstoffs der Bremstrommel (1) und

C ein Koeffizient ist, der die Fläche des Kolbenglieds (6), die Kraft-Übersetzungsverhältnisse zwischen Kolbenglied (6) und Bremsbacken (2, 18), den durch deren Anpreßkraft gedehnten Querschnitt der Bremstrommel (1) und einen Umrechnungsfaktor für deren Dehnung in Drehwinkel des Bremsnockens (3) berücksichtigt.

Da der erwähnte Elastizitätsmodul temperaturabhängig ist, ist er mit dem der Beharrungstemperatur bzw. der im Zeitpunkt ($t_1$) gegebenen Temperatur ($T_1$) der Bremstrommel (1) zugeordneten Wert ($E_1$) eingesetzt.

Die außerdem in der Figur schematisch dargestellte Anordnung (8, 10, 12, 16) zur Durchführung eines Verfahrens zur überschlägigen Ermittlung der mittleren Temperatur der Bremstrommel (1) besteht aus einem Verformungssensor (16), einem Drucksensor (8), einem Zeitglied (10) und einer Auswerteelektronik (12), in die das Zeitglied (10) integriert sein kann.

Der Verformungssensor (16) erfaßt den Drehwinkel (h) des Bremsnockens (3) und setzt diesen in ein elektrisches Verformungssignal um.

Der Drucksensor (8) erfaßt den Druck im Bremszylinder (7) und setzt diesen in ein elektrisches Drucksignal um.

In der Auswerteelektronik (12) ist eine temperaturabhängige Kennlinie des Drehwinkels (h), nachstehend Verformungskennlinie (11) $h = f_{(T)}$, bei druckfreier Bremseinrichtung gespeichert. "Druckfrei" bedeutet in erster Linie, daß diese Kennlinie mit der betriebsmäßig eingebauten Bremstrommel (1) ermittelt wird, also daß die Bremstrommel (1) dabei einer etwa von der Montage herrührenden mechanischen Grundbelastung unterworfen ist. Sollte diese Grundbelastung im Einzelfall vernachlässigbar sein, kann die Verformungskennlinie (11) auch mit loser Bremstrommel (1) ermittelt werden.

In der Auswerteelektronik (12) ist auch eine temperaturabhängige Kennlinie (13) des Elastizitätsmoduls $E = f_{(T)}$ des Werkstoffs der Bremstrommel (1) gespeichert.

Das Zeitglied (10) ist so ausgebildet, daß es zu Beginn einer Bremsbetätigung - das sei der Zeitpunkt ($t_0$) - ein erstes Meßsignal und zu einem vorbestimmten Zeitpunkt ($t_1$) danach ein zweites Meßsignal abgibt.

Beginn und Ende der Bremsbetätigung können dem Zeitglied (10) auf jede geeignete Art signalisiert werden, etwa durch einen Signalgeber an einem vom Fahrer bedienten Bremswertgeber. Vorliegend wertet das Zeitglied (10) als Beginn und Ende der Bremsbetätigung den Durchgang des Drucks im Bremszylinder (7) durch den Wert des Ansprechdrucks ($p_0$). Zu diesem Zweck ist das Zeitglied (10) mit dem Ausgang des Drucksensors (8) verbunden.

Die Auswerteelektronik (12) ist eingangsseitig mit den Ausgängen des Verformungssensors (16), des Drucksensors (8) und des Zeitglieds (10) verbunden.

Die Auswerteelektronik (12) ist so ausgebildet, daß sie bei Erhalt des ersten Meßsignals die Schritte durchführt:

- Erfassen des die Anfangsverformung der Bremstrommel (1) abbildenden Anfangs-Drehwinkels ($h_0$) in Gestalt des entsprechenden Verformungssignals,
- Ermitteln der ($h_0$) zugeordneten Anfangstemperatur ($T_0$) der Bremstrommel (1) aus der Verformungskennlinie (11),
- anhand ($T_0$) Ermittlung des zugeordneten Anfangs-Elastizitätsmoduls ($E_0$) des Werkstoffs der Bremstrommel (1) aus der Kennlinie (13),
- Speichern des Anfangs-Elastizitätsmoduls ($E_0$).

Des weiteren ist die Auswerteelektronik (12) so ausgebildet, daß sie bei Erhalt des zweiten Meßsignals die Schritte durchführt:

- Erfassen des vorhandenen Bremsdrucks ($p_1$) in Gestalt des Drucksignals und des die vorhandene Verformung der Bremstrommel (1) abbildenden Drehwinkels ($h_1$) in Gestalt des entsprechenden Verformungssignals,
- Errechnung des angenäherten elastischen Anteils $h_{1el}$ des Drehwinkels ($h_1$) nach der Formel

$$h_{1el} = \frac{1}{E_0} \cdot C \cdot (p_1 - p_0) \quad (III)$$

- Errechnung des angenäherten thermischen Anteils $h_{1th}$ des Drehwinkels ($h_1$) nach der Formel

$$h_{1th} = h_1 - h_{1el} - h_0, \quad (IV)$$

- anhand ($h_{1th}$) Ermitteln der zugehörigen Temperatur ($T_1$) aus der Verformungskennlinie (11),
- Abgabe eines ($T_1$) abbildenden Temperatursignals.

Formel (IV) ist die nach ($h_{1th}$) aufgelöste Formel (I). Formel (III) entspricht der Formel (II), verwendet jedoch den Anfangs-Elastizitätsmodul ($E_0$) anstelle des wahren Elastizitätsmoduls ($E_1$).

Die Auswerteelektronik (12) ermittelt also unter der Annahme, daß sich der Elastizitätsmodul zwischen den Zeitpunkten ($t_0$) und ($t_1$) nicht verändert hat, in Gestalt der Temperatur ($T_1$) eine angenäherte mittlere Temperatur der Bremstrommel (1) für den Zeitpunkt ($t_1$). Wie genau der so gewonnene Überschlagswert der wahren mittleren Temperatur zu diesem Zeitpunkt entspricht, hängt unter anderem von der Steigung der temperaturabhängigen Kennlinie (13) des Elastizitätsmoduls, dem Abstand der Zeitpunkte ($t_0$) und ($t_1$) und der Höhe des Bremsdrucks ($p_1$) ab. Für viele Einsatzfälle wird dieser Überschlagswert ausreichen.

Für Einsatzfälle, in denen der soeben erwähnte Überschlagswert nicht ausreicht, kann die Auswerteelektronik (12) so ausgebildet sein, daß sie zwischen die Schritte "anhand ($h_{1th}$) Ermitteln der zugehörigen Temperatur ($T_1$)" und "Abgabe eines ($T_1$) abbildenden

Temperatursignals" eine Wiederholungsschleife einschiebt mit den Schritten:

- Ermittlung des ($T_1$) zugeordneten Elastizitätsmoduls ($E_{1w1}$) aus der Kennlinie (13),
- Errechnung eines korrigierten angenäherten elastischen Anteils ($h_{1elw1}$) des Drehwinkels ($h_1$) nach Formel (III), jedoch mit ($E_{1w1}$)
- Errechnung eines korrigierten angenäherten thermischen Anteils ($h_{1thw1}$) des Drehwinkels ($h_1$) nach Formel (IV) mit ($h_{1elw1}$),
- anhand des korrigierten angenäherten thermischen Anteils ($h_{1thw1}$) Ermitteln der zugehörigen Temperatur ($T_{1w1}$) aus der Verformungskennlinie (11),

wobei der Index "w" auf die Wiederholung und die "1" dahinter auf die erste Wiederholung hinweisen.

Durch die Wiederholungsschleife wird die zunächst ermittelte Temperatur ($T_1$) der wahren mittleren Temperatur der Bremstrommel (1) iterativ angenähert.

Durch m-fache Durchführung der Wiederholungsschleife mit dem der jeweils bei der vorangegangenen Wiederholungsschleife festgestellten Temperatur ($T_{1w.}$) entsprechenden Elastizitätsmodul ($E_{1w.}$) läßt sich die ermittelte Temperatur ($T_{1wm}$) der wahren mittleren Temperatur der Bremstrommel (1) bei ausreichend großer Bestimmung von m beliebig annähern, wobei die Zahl hinter dem Index "w" die Anzahl der Wiederholungsschleifen angibt. Bei der Rechengeschwindigkeit moderner elektronischer Rechner kann auf diese Weise praktisch noch im Zeitpunkt ($t_1$) die wahre Temperatur der Bremstrommel (1) sehr genau ermittelt werden.

Die Anordnung (8, 10, 12, 16) läßt sich so fortbilden, daß sie die mittlere Temperatur der Bremstrommel (1) auch zu einem vorbestimmten weiteren Zeitpunkt ($t_2$) oder mehreren vorbestimmten weiteren Zeitpunkten ($t_2 \dots t_n$) ermittelt. Das Zeitglied (10) ist in diesem Fall so ausgebildet, daß es zu dem Zeitpunkt ($t_2$) bzw. zu den Zeitpunkten ($t_2 \dots t_n$) ein zweites bzw. zweites bis n-tes Meßsignal abgibt. Die Auswerteelektronik (12) vollzieht in diesem Fall bei Erhalt jedes dieser Meßsignale die weiter vorn erwähnten Schritte bzw., ggf., Wiederholungsschleifen mit den dann erfaßten Größen

$$p_2 \dots p_n,$$
$$h_2 \dots h_n$$

und den dann ermittelten bzw. errechneten Werten

$$h_{2el} \dots h_{nelw m},$$
$$h_{2th} \dots h_{nthw m},$$
$$E_{2w1} \dots E_{nw m},$$
$$T_2 \dots T_{nw m},$$

wobei der Index "2" bzw. "n" den jeweiligen Zeitpunkt angibt.

Dadurch ermöglicht die Anordnung (8, 10, 12, 16) eine Überwachung der Temperatur der Bremstrommel (1) zu mehreren Zeitpunkten innerhalb einer Bremsbetätigung. Bei entsprechend hoher Anzahl (n)

der Zeitpunkte ($t_2$ ... $t_n$) und ausreichend kurzen Zeitintervallen zwischen den einzelnen Zeitpunkten läßt sich die Überwachung zu einer praktisch lückenlosen ausbauen.

Die Auswerteelektronik (12) läßt sich auch derart fortbilden, daß sie die jeweils ermittelte angenäherte mittlere Temperatur ($T_1$, $T_{1w1}$ ... $T_{1wm}$, $T_2$ ... $T_n$, $T_{2w1}$ ... $T_{2wm}$, $T_{nw1}$ ... $T_{nwm}$) mit einem vorbestimmten Grenzwert vergleicht und zusätzlich zu dem Temperatursignal oder anstelle des Temperatursignals ein Warnsignal abgibt, wenn sie Gleichheit zwischen der ermittelten angenäherten mittleren Temperatur und dem Grenzwert feststellt. Weil die mittlere Bremstemperatur der Bremstrommel (1) den thermischen Belastungszustand der Bremseinrichtung wiederspiegelt, bietet diese Fortbildung der Anordnung (8, 10, 12, 16) die Möglichkeit, eine thermische Überlastungsgefahr der Bremseinrichtung und die damit einhergehende "Fading"-Gefahr zu erkennen.

Mit (14) ist eine Einrichtung angedeutet, die das Temperatursignal und/oder das Warnsignal in eine von dem Fahrer erfaßbare Form umsetzt.

Die Anordnung (8, 10, 12, 16) ermöglicht auch eine Kontrolle der Verschleiß-Nachstelleinrichtung. Stellt diese nicht nach, so erfaßt der Verformungssensor (16) bei Bremsbetätigungen ungewöhnlich große Anfangs-Drehwinkel ($h_0$), die mittels einer geeigneten Einrichtung oder einer entsprechenden Ausbildung der Auswerteelektronik (12) in einen Hinweis für den Fahrer auf eine Funktionsstörung der Verschleiß-Nachstelleinrichtung umgesetzt werden können. Die Auswerteelektronik (12) könnte in diesem Zusammenhang beispielsweise so ausgebildet werden, daß sie eine Plausibilitätsprüfung des Verformungssignals beim Ansprechdruck ($p_0$) oder im Zeitpunkt ($t_0$), z.B. einen Vergleich mit einem eingespeicherten Grenzwert, vornimmt und bei Feststellung einer Nichtplausibilität ein Warnsignal abgibt. Durch eine Einrichtung (15), die dieses Warnsignal in eine für den Fahrer erfaßbare Form umsetzt, ist angedeutet, daß die Anordnung (8, 10, 12, 16) auch in diese Richtung fortgebildet ist.

Als die Verformung der Bremstrommel (1) abbildender Stellweg kann beispielsweise auch der Hub des Kolbenglieds (6) dienen. In diesem Hub würde sich jedoch auch die - in erster Linie elastische - Verformung der Übertragungseinrichtung (4, 5) abbilden. Als Elastizitätsmodul müßte in diesem Fall ein resultierender Elastizitätsmodul der Werkstoffe der Bremstrommel (1) und der Übertragungseinrichtung (4, 5) herangezogen werden. Es liegt auf der Hand, daß die im Ausführungsbeispiel angewandte Erfassung der Verformung mittels des Drehwinkels (h) des Bremsnockens (3) demgegenüber erhebliche Vorteile aufweist.

Im Ausführungsbeispiel wurde die Bremstrommel (1) wegen der relativ einfachen Erfaßbarkeit ihrer Verformungen als hinsichtlich seiner mittleren Temperatur überwachtes Bauteil der Bremseinrichtung gewählt. Die im Ausführungsbeispiel realisierte technische Lehre läßt sich aber in entsprechender Anwendung auf andere Bauteile einer Trommelbremse und auf ganz andere Bauarten der Bremseinrichtung übertragen. Insbesondere ist in diesem Zusammenhang an eine Scheibenbremse zu denken. Im Falle einer Teilscheibenbremse könnte beispielsweise der Bremssattel als hinsichtlich seiner mittleren Temperatur überwachtes Bauteil infrage kommen, im Falle einer Vollscheibenbremse könnte dies beispielsweise das die Funktion der Bremsscheibe übernehmende Bremsgehäuse sein. In einem solchen Fall könnte dem Hub eines Kolbenglieds als die charakteristische Verformung abbildende Größe ein höherer Stellenwert zukommen.

Schließlich erkennt der Fachmann, daß sich das erfindungsgemäße Verfahren auch mit jeder anderen geeigneten Anordnung realisieren läßt.

**Patentansprüche**

1. Verfahren zur überschlägigen Ermittlung der mittleren Temperatur eines Bauteils, z.B. einer Bremstrommel (1), einer durch Druck betätigbaren und eine Verschleiß-Nachstelleinrichtung enthaltenden Bremsrichtung, dadurch gekennzeichnet, daß

   a) bei druckfreier Bremseinrichtung die temperaturabhängige Kennlinie einer eine charakteristische Verformung des Bauteils (1) abbildenden Größe h, nachstehend Verformungskennlinie $h = f_{(T)}$, ermittelt wird,

   b) die temperaturabhängige Kennlinie des Elastizitätsmoduls $E = f_{(T)}$ des Werkstoffs des Bauteils (1) ermittelt wird,

   c) bei Beginn einer Bremsbetätigung (Zeitpunkt $t_0$) die die vorhandene Anfangsverformung des Bauteils (1) kennzeichnende Größe $h_0$ gemessen wird,

   d) aus der temperaturabhängigen Verformungskennlinie $h = f_{(T)}$ die der die Anfangsverformung kennzeichnende Größe $h_0$ zugeordnete Anfangstemperatur $T_0$ des Bauteils (1) ermittelt wird,

   e) aus der temperaturabhängigen Kennlinie des Elastizitätsmoduls $E = f_{(T)}$ der der Anfangstemperatur $T_0$ zugeordnete Anfangs-Elastizitätsmodul $E_0$ ermittelt wird,

   f) zu einem vorbestimmten Zeitpunkt $t_1$ nach Beginn der Bremsbetätigung der Bremsdruck $p_1$ und die die vorhandene Verformung kennzeichnende Größe $h_1$ gemessen werden,

   g) aus der im Zeitpunkt $t_1$ gemessenen Größe $h_1$

   ga) nach der Beziehung

$$h_{1el} = \frac{1}{E_0} \cdot C \cdot (p_1 - p_0)$$

angenähert deren auf elastischer Verformung beruhender Anteil $h_{1el}$,
gb) nach der Beziehung

$$h_{1th} = h_1 - h_{1el} - h_0$$

angenähert deren auf thermischer Verformung beruhender Anteil $h_{1th}$, errechnet werden mit $p_0$ als Ansprechdruck der Bremseinrichtung,

h) anhand des angenäherten auf thermischer Verformung beruhenden Anteils $h_{1\,th}$ aus der temperaturabhängigen Verformungskennlinie $h = f_{(T)}$ die zugeordnete Temperatur $T_1$ als angenäherte mittlere Temperatur des Bauteils (1) im Zeitpunkt $t_1$ entnommen wird.

2. Verfahren nach Anspruch 1, <u>dadurch gekennzeichnet,</u>
daß als Beginn der Bremsbetätigung (Zeitpunkt $t_0$) das Erreichen des Ansprechdrucks $p_0$ gewertet wird.

3. Verfahren nach einem der Ansprüche 1 oder 2, <u>dadurch gekennzeichnet,</u>
daß die Verfahrensschritte f), g) und h) zu einem vorbestimmten Zeitpunkt $t_2$ oder mehreren vorbestimmten Zeitpunkten $t_2 \ldots t_n$ nach dem Zeitpunkt $t_1$ wiederholt werden.

4. Verfahren nach einem der vorhergehenden Ansprüche, <u>dadurch gekennzeichnet,</u>
daß in dem jeweiligen Zeitpunkt $t_1 \ldots t_n$
a) aus der temperaturabhängigen Kennlinie des Elastizitätsmoduls $E = f_{(T)}$ des Werkstoffs des Bauteils (1) der der jeweiligen angenäherten Temperatur $T_1 \ldots T_n$ zugeordnete Elastizitätsmodul $E_{1w1} \ldots E_{nw1}$ entnommen wird,
b) in einer Wiederholungsschleife die Verfahrensschritte e), g) und h) des Anspruchs 1 mit diesem Elastizitätsmodul $E_{1w1} \ldots E_{nw1}$ als Anfangs-Elastizitätsmodul wiederholt werden.

5. Verfahren nach Anspruch 4, <u>dadurch gekennzeichnet,</u>
daß die Verfahrensschritte a) und b) des Anspruchs 4 in dem jeweiligen Zeitpunkt $t_1 \ldots t_n$ m-mal mit dem in der jeweils vorangegangenen Wiederholungsschleife ermittelten Elastizitätsmodul $E_{1w.} \ldots E_{nw.}$ als Anfangs-Elastizitätsmodul wiederholt werden.

6. Verfahren nach einem der vorhergehenden Ansprüche, <u>dadurch gekennzeichnet,</u>
daß ein Warnsignal abgegeben wird, wenn die jeweilige angenäherte Temperatur $T_1 \ldots T_n$ bzw. $T_{1wm} \ldots T_{nwm}$ einen vorbestimmten Grenzwert erreicht.

7. Anordnung zur Durchführung eines der Verfahren nach den Ansprüchen 1 und 3, gekennzeichnet durch die Merkmale:
a) es ist ein die die charakteristische Verformung des Bauteils (1) abbildende Größe $h_1 \ldots h_n$ erfassender und in ein elektrisches Verformungssignal umsetzender Verformungssensor (16) vorgesehen;
b) es ist ein den Druck $p_0 \ldots p_n$ erfassender und in ein elektrisches Drucksignal umsetzender Drucksensor (8) vorgesehen;
c) es ist eine das Verformungssignal und das Drucksignal empfangende Auswerteelektronik (12) vorgesehen;
d) in der Auswerteelektronik (12) sind die temperaturabhängige Verformungskennlinie (11) $h = f_{(T)}$ des Bauteils (1) sowie die temperaturabhängige Kennlinie (13) des Elastizitätsmoduls $E = f_{(T)}$ des Werkstoffs des Bauteils (1) gespeichert;
e) es ist ein Zeitglied (10) vorgesehen, welches zu Beginn der Bremsbetätigung (Zeitpunkt $t_0$) und im Zeitpunkt $t_1$ bzw. in den danach liegenden Zeitpunkten $t_2 \ldots t_n$ ein erstes bzw. zweites bis n-tes Meßsignal an die Auswerteelektronik (12) abgibt;
f) die Auswerteelektronik (12) ist so ausgebildet, daß sie bei Erhalt des ersten Meßsignals die Verfahrensschritte c), d) und e) des Anspruchs 1 durchführt und den Anfangs-Elastizitätsmodul $E_0$ speichert;
g) die Auswerteelektronik (12) ist ferner so ausgebildet, daß sie bei Erhalt des zweiten Meßsignals und, ggf., der weiteren Meßsignale jeweils die Verfahrensschritte f), g) und h) des Anspruchs 1 durchführt und ein die jeweilige angenäherte mittlere Temperatur $T_1 \ldots T_n$ des Bauteils (1) abbildendes Temperatursignal abgibt.

8. Anordnung zur Durchführung eines der Verfahren nach den Ansprüchen 1 und 3, gekennzeichnet durch die Merkmale:
a) es ist ein die die charakteristische Verformung des Bauteils (1) abbildende Größe $h_1 \ldots h_n$ erfassender und in ein elektrisches Verformungssignal umsetzender Verformungssensor (16) vorgesehen;
b) es ist ein den Druck $p_0 \ldots p_n$ erfassender und in ein elektrisches Drucksignal umsetzender Drucksensor (8) vorgesehen;
c) es ist eine das Verformungssignal und das Drucksignal empfangende Auswerteelektronik (12) vorgesehen;
d) in der Auswerteelektronik (12) sind die temperaturabhängige Verformungskennlinie (11) h = f$_{(T)}$ des Bauteils (1) sowie die temperaturabhängige Kennlinie (13) des Elastizitätsmoduls E = f$_{(T)}$ des Werkstoffs des Bauteils (1) gespeichert;

e) es ist ein Zeitglied (10) vorgesehen, welches zu Beginn der Bremsbetätigung (Zeitpunkt t$_0$) und im Zeitpunkt t$_1$ bzw. in den danach liegenden Zeitpunkten t$_2$ ... t$_n$ ein erstes bzw. zweites bis n-tes Meßsignal an die Auswerteelektronik (12) abgibt;

f) die Auswerteelektronik (12) ist so ausgebildet, daß sie bei Erhalt des ersten Meßsignals die Verfahrensschritte c), d) und e) des Anspruchs 1 durchführt und den Anfangs-Elastizitätsmodul E$_0$ speichert;

g) die Auswerteelektronik (12) ist ferner so ausgebildet, daß sie bei Erhalt des zweiten Meßsignals und, ggf., der weiteren Meßsignale jeweils die Verfahrensschritte f), g) und h) des Anspruchs 1 durchführt und die jeweilige angenäherte mittlere Temperatur T$_1$ ... T$_n$ des Bauteils (1) mit einem eingespeicherten Grenzwert vergleicht und bei Gleichheit ein Warnsignal abgibt.

9. Anordnung nach einem der Ansprüche 7 oder 8, dadurch gekennzeichnet, daß das Zeitglied (10) das Drucksignal empfängt und bei dem Anlegedruck p$_o$ das erste Meßsignal abgibt.

10. Anordnung nach einem der Ansprüche 7 bis 9, dadurch gekennzeichnet, daß die Auswerteelektronik (12) so ausgebildet ist, daß sie

a) im Zeitpunkt t$_1$ bzw. in den Zeitpunkten t$_2$ ... t$_n$ aus der temperaturabhängigen Kennlinie (13) des Elastizitätsmoduls E = f$_{(T)}$ den der jeweiligen Temperatur T$_1$ ... T$_n$ zugeordneten Elastizitätsmodul E$_{1w1}$ ... E$_{nw1}$ entnimmt,

b) mit diesem Elastizitätsmodul E$_{1w1}$ ... E$_{nw1}$ als Anfangs-Elastizitätsmodul die Verfahrensschritte g) und h) des Anspruchs 1 wiederholt und

c) das Temperatursignal bzw. das Warnsignal entsprechend der bei der Wiederholung ermittelten angenäherten mittleren Temperatur T$_{1w1}$ ... T$_{nw1}$ bildet.

11. Anordnung nach Anspruch 10, dadurch gekennzeichnet, daß die Auswerteelektronik (12) so ausgebildet ist, daß sie die Durchführung der Merkmale a) und b) des Anspruchs 10 mit dem bei der jeweils vorhergegangenen Durchführung ermittelten Wert des Elastizitätsmoduls E$_{1w.}$ ... E$_{nw.}$ m-mal wiederholt und das Temperatursignal bzw. das Warnsignal entsprechend der bei der m-ten Wiederholung ermittelten angenäherten Temperatur T$_{1wm}$ ... T$_{nwm}$ bildet.

12. Anordnung nach einem der Ansprüche 7 oder 9 bis 11, soweit sie von Anspruch 7 abhängen, dadurch gekennzeichnet, daß die Auswerteelektronik (12) so ausgebildet ist, daß sie zusätzlich zur Abgabe des Temperatursignals die jeweilige angenäherte mittlere Temperatur T$_1$ ... T$_n$ bzw. T$_{1wm}$ ... T$_{nwm}$ mit einem eingespeicherten Grenzwert vergleicht und bei Gleichheit ein Warnsignal abgibt.

## Claims

1. Method for estimating the mean temperature of a component, for example of a brake drum (1), of a braking device actuated by means of pressure and containing a wear-adjustment device, characterised in that

a) when the braking device is free of pressure, the temperature-dependent characteristic of a magnitude h representing a characteristic deformation of the component (1) and referred to hereinafter as deformation characteristic h = f$_{(T)}$, is ascertained,

b) the temperature-dependent characteristic of the modulus of elasticity E = f$_{(T)}$ of the material of the component (1) is ascertained,

c) at the start of a brake actuation (time t$_o$) the magnitude h$_o$ characterising the initial deformation of the component (1) which is present is measured,

d) from the temperature-dependent deformation characteristic h = f$_{(T)}$ the initial temperature T$_o$ of the component (1), associated with the magnitude h$_o$ characterising the initial deformation, is ascertained,

e) from the temperature-dependent characteristic of the modulus of elasticity E = f$_{(T)}$ the initial modulus of elasticity E$_o$ associated with the initial temperature T$_o$ is ascertained,

f) at a predetermined time t$_1$ after the start of the brake actuation the brake pressure p$_1$ and the magnitude h$_1$ characterising the deformation which is present are measured,

g) from the magnitude h$_1$ measured at the time t$_1$

ga) according to the relationship

$$h_{1e1} = \frac{1}{E_o} \cdot C \cdot (p_1 - p_o)$$

approximately the portion h$_{1el}$, based on elastic deformation

gb) according to the relationship

$$h_{1th} = h_1 - h_{1e1} - h_o$$

approximately the portion H$_{1th}$, based on thermal deformation

are calculated with p$_o$ as the response pressure of the braking device,

h) with reference to the approximate portion $h_{1th}$ based on thermal deformation, from the temperature-dependent deformation characteristic $h=f_{(T)}$ the associated temperature $T_1$ is taken as the approximate mean temperature of the component (1) at the time $t_1$.

2. Method according to Claim 1, characterised in that the reaching of the response pressure $p_o$ is taken as the start of the brake actuation (time $t_o$).

3. Method according to one of Claims 1 or 2, characterised in that the method steps f), g), and h) are repeated at a predetermined time $t_2$ or a plurality of predetermined times $t_2....t_n$ after the time $t_1$.

4. Method according to one of the preceding Claims, characterised in that at the respective time $t_1....t_n$
   a) from the temperature-dependent characteristic of the modulus of elasticity $E=f_{(T)}$ of the material of the component (1) the modulus of elasticity ($E_{1w1}$ ... $E_{nw1}$ associated with the respective approximate temperature $T_1....T_n$ is taken,
   b) in a repetition loop the method steps e), g) and h) of Claim 1 are repeated with the modulus of elasticity $E_{1w1}$ ... $E_{nw1}$ as the initial modulus of elasticity.

5. Method according to Claim 4, characterised in that the method steps a) and b) of Claim 4 are repeated at the respective time $t_1$ ... $t_n$ m times with the modulus of elasticity $E_{1w.}$ ... $E_{nw.}$, ascertained in the respective preceding repetition loop, as the initial modulus of elasticity.

6. Method according to one of the preceding Claims, characterised in that a warning signal is delivered when the respective approximate temperature $T_1$ ...$T_n$ or $T_{1wm}$ ... $T_{nwm}$ reaches a predetermined limit value.

7. Arrangement for the execution of one of the methods according to Claims 1 and 3, characterised by the features:
   a) a deformation sensor (16) is provided which detects and converts into an electrical deformation signal the magnitude $h_1$ ...$h_n$ representing the characteristic deformation of the component (1);
   b) a pressure sensor (8) is provided which detects and converts into an electrical pressure signal the pressure $p_o$ ...$p_n$;
   c) evaluation electronics (12) are provided which receive the deformation signal and the pressure signal;

d) the temperature-dependent deformation characteristic (11) $h=f_{(T)}$ of the component (1) and the temperature-dependent characteristic (13) of the modulus of elasticity $E=f_{(T)}$ of the material of the component (1) are stored in the evaluation electronics (12);
   e) a time function element (10) is provided which at the start of the brake actuation (time $t_o$) and at the time $t_1$ or at the subsequent times $t_2$ ... $t_n$ delivers a first or second to nth measurement signal to the evaluation electronics (12);
   f) the evaluation electronics (12) are so constructed that on receiving the first measurement signal they execute the method steps c), d) and e) of Claim 1 and store the initial modulus of elasticity $E_o$;
   g) the evaluation electronics (12) are furthermore so constructed that on receiving the second measurement signal and, optionally, the further measurement signals they in each case execute the method steps f), g) and h) of Claim 1 and deliver a temperature signal representing the respective approximate mean temperature $T_1$ ... $T_n$ of the component (1).

8. Arrangement for the execution of one of the methods according to Claims 1 and 3, characterised by the features:
   a) a deformation sensor (16) is provided which detects and converts into an electrical deformation signal the magnitude $h_1$ ...$h_n$ representing the characteristic deformation of the component (1);
   b) a pressure sensor (8) is provided which detects and converts into an electrical pressure signal the pressure $p_o$ ...$p_n$;
   c) evaluation electronics (12) are provided which receive the deformation signal and the pressure signal;
   d) the temperature-dependent deformation characteristic (11) $h=f_{(T)}$ of the component (1) and the temperature-dependent characteristic (13) of the modulus of elasticity $E=f_{(T)}$ of the material of the component (1) are stored in the evaluation electronics (12);
   e) a time function element (10) is provided which at the start of the brake actuation (time $t_o$) and at the time $t_1$ or at the subsequent times $t_2$ ... $t_n$ delivers a first or second to nth measurement signal to the evaluation electronics (12);
   f) the evaluation electronics (12) are so constructed that on receiving the first measurement signal they execute the method steps c), d) and e) of Claim 1 and store the initial modulus of elasticity $E_o$;

g) the evaluation electronics (12) are furthermore so constructed that on receiving the second measurement signal and, optionally, the further measurement signals they in each case execute the method steps f), g) and h) of Claim 1 and compare the respective approximate mean temperature $T_1 ... T_n$ of the component (1) with a stored limit value and deliver a warning signal when they are equal.

9. Arrangement according to one of Claims 7 to 8, characterised in that the time function element (10) receives the pressure signal and delivers the first measurement signal at the application pressure $p_o$.

10. Arrangement according to one of Claims 7 to 9, characterised in that the evaluation electronics (12) are so constructed that
    a) at the time $t_1$ or at the times $t_2 ... t_n$ they take from the temperature-dependent characteristic (13) of the modulus of elasticity $E=f_{(T)}$ the modulus of elasticity $E_{1w1} ... E_{nw1}$ associated with the respective temperature $T_1 ... T_n$,
    b) they repeat the method steps g) and h) of Claim 1 with the modulus of elasticity $E_{1w1} ... E_{nw1}$ as the initial modulus of elasticity and
    c) they form the temperature signal or the warning signal corresponding to the approximate mean temperature $T_{1w1} ... T_{nw1}$ ascertained during the repetition.

11. Arrangement according to Claim 10, characterised in that the evaluation electronics (12) are so constructed that they repeat m times the execution of the features a) and b) of Claim 10 with the value, ascertained during the respective preceding execution, of the modulus of elasticity $E_{1w.} ... E_{nw.}$ and form the temperature signal or the warning signal corresponding to the approximate temperature $T_{1wm} ... T_{nwm}$ ascertained during the mth repetition.

12. Arrangement according to one of Claims 7 or 9 to 11 insofar as they depend on Claim 7, characterised in that the evaluation electronics (12) are so constructed that in addition to the delivery of the temperature signal they compare the respective approximate mean temperature $T_1 ... T_n$ or $T_{1wm} ... T_{nwm}$ with a stored limit value and deliver a warning signal when they are equal.

**Revendications**

1. Procédé pour déterminer approximativement la température moyenne d'une pièce, par exempe d'un tambour de frein (1), d'un système de freinage actionné par pression et contenant un mécanisme de rattrapage d'usure, <u>caractérisé</u> en ce que
    a) on détermine, alors que le système de freinage est sans pression, la caractéristique en fonction de la température d'une grandeur h représentant une déformation caractéristique de la pièce (1), appelée ci-après caractéristique de déformation $h = f_{(T)}$,
    b) on détermine la caractéristique en fonction de la température du module d'élasticité $E = f_{(T)}$ du matériau de la pièce (1),
    c) au début d'un actionnement du frein (instant $t_0$), on mesure la grandeur $h_0$ caractérisant la déformation initiale existante de la pièce (1),
    d) à partir de la caractéristique de déformation en fonction de la température $h = f_{(T)}$, on détermine la température initiale $T_0$ de la pièce (1) coordonnée à la grandeur $h_0$ caractérisant la déformation initiale,
    e) à partir de la caractéristique du module d'élasticité en fonction de la température $E = f_{(T)}$, on détermine le module d'élasticité initial $E_0$ coordonné à la température initiale $T_0$,
    f) à un instant préfixé $t_1$ après le début de l'actionnement du frein, on mesure la pression de freinage $p_1$ et la grandeur $h_1$ caractérisant la déformation existante,
    g) à partir de la grandeur $h_1$ mesurée à l'instant $t_1$,
    on calcule approximativement
        ga) selon la relation
$$h_{1el} = \frac{1}{E_0} \cdot C \cdot (p_1 - p_0)$$
        sa fraction $h_{1el}$ basée sur la déformation élastique et
        gb) selon la relation
$$h_{1th} = h_1 - h_{1el} - h_0$$
        sa fraction $h_{1th}$ basée sur la déformation thermique,
    avec $p_0$ en tant que pression d'entrée en action du système de freinage et
    h) à l'aide de la fraction approchée $h_{1th}$ basée sur la déformation thermique, on extrait de la caractéristique de déformation en fonction de la température $h = f_{(T)}$, la température $T_1$ coordonnée en tant que température moyenne approchée de la pièce (1) à l'instant $t_1$.

2. Procédé selon la revendication 1, caractérisé en ce que l'on utilise comme début de l'actionnement du frein (instant $t_0$) l'instant où la pression d'entrée en action $p_0$ est atteinte.

3. Procédé selon la revendication 1 ou 2, caractérisé en ce que l'on répète les opérations f), g) et h) du procédé à un instant $t_2$ préfixé ou à plusieurs instants $t_2$ ... $t_n$ préfixés après l'instant $t_1$.

4. Procédé selon une des revendications précédentes, caractérisé en ce que, à chacun des instants $t_1$ ... $t_n$

a) on extrait de la caractéristique du module d'élasticité en fonction de la température E = $f_{(T)}$ du matériau de la pièce (1), le module d'élasticité $E_{1w1}$... $E_{nw1}$ coordonné à la température $T_1$ ... $T_n$ approchée concernée et

b) dans une boucle de répétiton, on répète les opérations e), g) et h) du procédé de la revendication 1 avec ce module d'élasticité $E_{1w1}$ ... $E_{nw1}$ en tant que module d'élasticité initial.

5. Procédé selon la revendication 4, caractérisé en ce que, à chaque instant $t_1$ ... $t_n$, on répète les opérations a) et b) du procédé de la revendication 4 à m reprises avec le module d'élasticité $E_{1w.}$ ... $e_{nw.}$ déterminé dans la boucle de répétition précédente comme module d'élasticité initial.

6. Procédé selon une des revendications précédentes, caractérisé en ce que l'on délivre un signal d'avertissement lorsque la température approchée $T_1$ ... $T_n$ ou $T_{1wm}$ ... $T_{nwm}$ atteint une valeur limite préfixée.

7. Dispositif pour la mise en oeuvre d'un des procédés selon les revendications 1 et 3, <u>caractérisé</u> en ce que:

a) un capteur de déformation (16) est prévu qui relève la grandeur $h_1$ ... $h_n$ représentant la déformation caractéristique de la pièce (1) et la convertit en un signal électrique de déformation;

b) un capteur de pression (8) est prévu qui détecte la pression $p_0$ ... $p_n$ et la convertit en un signal électrique de pression;

c) une électronique d'exploitation (12) est prévue qui reçoit le signal de déformation et le signal de pression;

d) dans l'électronique d'exploitation (12), sont mémorisées la caractérisque de déformation en fonction de la température h = $f_{(T)}$ de la pièce (1) ainsi que la caractéristique (13) du module d'élasticité en fonction de la température h = $f_{(T)}$ du matériau de la pièce (1);

e) un élément à fonction temporelle (10) est prévu qui délivre au début de l'actionnement du frein (instant $t_0$) et à l'instant $t_1$ ou aux instants $t_2$ ... $t_n$ consécutifs, un premier respectivement un deuxième jusqu'à un n-ième signal de mesure à l'électronique d'exploitation (12);

f) l'électronique d'exploitation (12) est conçue de manière qu'à la réception du premier signal de mesure, elle exécute les opérations c), d)) et e) de la revendication 1 et mémorise le module d'élasticité initial $E_0$; et

g) l'électronique d'exploitation (12) est outre conçue de manière qu'à la réception du deuxième signal de mesure et, éventuellement, des signaux de mesure consécutifs, elle exécute chaque fois les opérations f), g) et h) de la revendication 1 et délivre un signal de température représentant la température moyenne approchée $T_1$ ... $T_n$ de la pièce (1).

8. Dispositif pour la mise en oeuvre d'un des procédés selon les revendications 1 et 3, <u>caractérisé</u> en ce que:

a) un capteur de déformation (16) est prévu qui relève la grandeur $h_1$ ... $h_n$ représentant la déformation caractéristique de la pièce (1) et la convertit en un signal électrique de déformation;

b) un capteur de pression (8) est prévu qui détecte la pression $p_0$ ... $P_n$ et la convertit en un signal électrique de pression;

c) une électronique d'exploitation (12) est prévue qui reçoit le signal de déformation et le signal de pression;

d) dans l'électronique d'exploitation (12), sont mémorisées la caractérisque de déformation en fonction de la température h = $f_{(T)}$ de la pièce (1) ainsi que la caractéristique (13) du module d'élasticité en fonction de la température h = $f_{(T)}$ du matériau de la pièce (1);

e) un élément à fonction temporelle (10) est prévu qui délivre au début de l'actionnement du frein (instant $t_0$)) et à l'instant $t_1$ ou aux instants $t_2$ ... $t_n$ consécutifs, un premier respectivement un deuxième jusqu'à un n-ième signal de mesure à l'électronique d'exploitation (12);

f) l'électronique d'exploitation (12) est conçue de manière qu'à la réception du premier signal de mesure, elle exécute les opérations c), d)) et e) de la revendication 1 et mémorise le module d'élasticité initial $E_0$; et

g) l'électronique d'exploitation (12) est en outre conçue de manière qu'à la réception du deuxième signal de mesure et, éventuellement, des signaux de mesure consécutifs, elle exécute chaque fois les opérations f), g) et h) de la revendication 1, compare la température moyenne approchée $T_1$ ... $T_n$ de la pièce (1) avec une valeur limite mémorisée et délivre un signal d'avertissement en cas d'égalité.

9. Dispositif selon la revendication 7 ou 8, caractérisé en ce que l'élément à fonction temporelle (10) reçoit le signal de pression et délivre le premier signal de mesure lorsque la pression d'application $p_0$ est atteinte.

10. Dispositif selon une des revendications 7 à 9, caractérisé en ce que l'électronique d'exploitation (12) est conçue de manière que

a) à l'instant $t_1$ ou aux instants $t_2 \ldots t_n$, elle extrait de la caractéristique (13) du module d'élasticité en fonction de la température $E = f_{(T)}$, le module d'élasticité $E_{1w1} \ldots E_{nw1}$ coordonné à la température $T_1 \ldots T_n$ concernée,

b) elle répète les opérations g) et h) de la revendication 1 avec ce module d'élasticité $E_{1w1} \ldots E_{nw1}$ en tant que module d'élasticité initial et

c) elle forme le signal de température ou le signal d'avertissement en conformité avec la température moyenne approchée $T_{1w1} \ldots T_{nw1}$ déterminée lors de la répétition.

11. Dispositif selon la revendication 10, caractérisé en ce que l'électronique d'exploitation (12) est conçue de manière qu'elle répète à m reprises l'exécution des points a) et b) de la revendication 10 avec la valeur du module d'élasticité $E_{1w.} \ldots E_{nw.}$ déterminée chaque fois lors de l'exécution précédente et elle forme le signal de température ou le signal d'avertissement en conformité avec la température approchée $T_{1wm} \ldots T_{nwm}$ déterminée à la m-ième répétition.

12. Dispositif selon une des revendications 7 ou 9 à 11, dans la mesure où elles dépendent de la revendication 7, caractérisé en ce que l'électronique d'exploitation (12) est conçue de manière qu'en plus de la délivrance du signal de température, elle compare la température moyenne approchée $T_1 \ldots T_n$ ou $T_{1wm} \ldots T_{nwm}$ avec une valeur limite mémorisée et délivre un signal d'avertissement en cas d'égalité.

EP 0 421 066 B1